# EUROPEAN PATENT SPECIFICATION

(11) **EP 1 965 457 B1**
(45) Date of publication and mention of the grant of the patent: **06.03.2013**
(21) Application number: 06842829.1
(22) Date of filing: 08.12.2006
(51) Int. Cl.: H01M 8/02, H01M 8/10

(54) **PROCESS FOR PRODUCING A SEPARATOR MATERIAL FOR FUEL CELL**
PROZESS ZUR HERSTELLUNG EINES SEPARATORMATERIALS FÜR EINE BRENNSTOFFZELLE
PROCEDE DE FABRICATION D'UN MATERIAU SEPARATEUR POUR PILE A COMBUSTIBLE

(30) Priority: 21.12.2005 JP 2005367587
(43) Date of publication of application: 03.09.2008
(73) Proprietor: Tokai Carbon Company, Ltd., Minato-ku, Tokyo 107-8636 (JP)
(72) Inventor: MATSUDA, Katsushi, Minato-ku, Tokyo 1078636 (JP); HIRANO, Nobuyuki, Minato-ku, Tokyo 1078636 (JP); TAHARA, Tomonori, Minato-ku, Tokyo 1078636 (JP); ENOMOTO, Mitsuo, Minato-ku, Tokyo 1078636 (JP)
(74) Representative: Müller-Wolff, Thomas
(86) International application number: PCT/JP2006/324998
(87) International publication number: WO 2007/072743

(56) References cited:
- EP-A2- 1 521 321
- JP-A- 2003 282 079
- JP-A- 2004 139 885
- JP-A- 2004 193 044
- JP-A- 2004 356 091

## Description

### TECHNICAL FIELD

The present invention relates to a separator material used for fuel cells such as a polymer electrolyte fuel cell, and a process of producing the same.

### BACKGROUND ART

A fuel cell directly converts the chemical energy of fuel into electrical energy at a high conversion efficiency. For example, a polymer electrolyte fuel cell can produce high power at a relatively low temperature. Therefore, the polymer electrolyte fuel cell is expected to be a small portable power supply such as an automotive power supply.

The polymer electrolyte fuel cell includes a stack formed by stacking single cells, two charge collectors provided outside the stack, and the like, each of the single cells including an electrolyte membrane formed of a polymer ion-exchange membrane such as a fluororesin ion-exchange membrane having a sulfonic acid group, catalytic electrodes supporting a catalyst such as platinum and provided on either side of the electrolyte membrane, separators provided with gas supply grooves for supplying a fuel gas (e.g., hydrogen) or an oxidant gas (e.g., oxygen or air) to the electrodes, and the like.

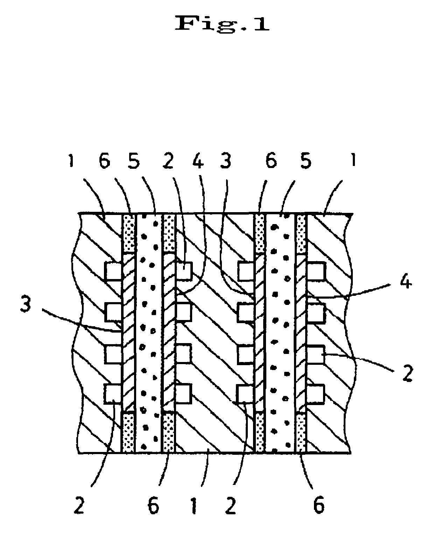

As shown in FIG. 1, the single cell includes a pair of electrodes 3 and 4 (cathode 3 and anode 4) disposed on either side of an electrolyte membrane 5 formed of a fluororesin ion-exchange membrane, separators 1 formed of a dense carbon material and disposed with the electrodes 3 and 4 interposed in between, and rubber sealing materials 6 provided on the ends of the separators in parallel with gas grooves. The electrodes 3 and 4 are formed of a porous body formed of carbon short fibers supporting a catalyst such as platinum, a product obtained by binding carbon black supporting a catalyst using a resin, or the like.

A plurality of grooves 2 are formed in the separator 1. The space formed between the groove 2 and the cathode 3 is used as a passage for an oxidant gas (oxygen-containing gas such as oxygen or air), and the space formed between the groove 2 and the anode 4 is used as a passage for a fuel gas (e.g., hydrogen gas or mixed gas containing hydrogen as the main component). A current is caused to flow between the electrodes by utilizing chemical reactions which occur when the fuel gas and the oxidant gas contact the electrodes. A cell stack is assembled by stacking several tens to several hundreds of single cells.

The power generation mechanism of the fuel cell is as follows. Specifically, the following reactions occur when a fuel gas (e.g., hydrogen gas) supplied to the anode of the cell and an oxidant gas (e.g., oxygen gas) supplied to the cathode come into contact with the electrodes, and electrons (e⁻) generated due to the reaction are removed to the outside as electrical energy.
Anode: H₂→2H⁺+2e⁻
Cathode: (1/2)O₂+2H⁺+2e⁻→H₂O
Total reaction: H₂+(1/2)O₂→H₂O

Therefore, since it is necessary to completely separately supply the fuel gas and the oxidant gas to the electrodes, the separator is required to exhibit excellent gas impermeability. Moreover, since it is effective to reduce the internal resistance of the cell in order to increase power generation efficiency, the separator is required to have a reduced thickness and exhibit high conductivity.

In order to improve the cell performance, it is important to prevent an increase in contact resistance between the separator and the electrode and prevent a leakage of gas between or from the single cells by assembling the stack so that the single cells closely adhere and maintain an excellent contact state during power generation. Specifically, it is important for the separator material to exhibit high strength so that breakage or deficiency does not occur during assembly, and to exhibit sufficient strength at a cell operating temperature (about 80 to 120°C).

A carbon material is suitable as the separator material for which the above properties are required. A graphite material has poor workability, low airtightness, and insufficient gas impermeability. A glass-like carbon material has a dense texture and excellent gas impermeability, but has poor machinability due to high hardness and fragility.

Therefore, a carbon and cured resin molded product produced by binding a carbon powder (e.g., graphite) using a thermosetting resin (binder) and molding the resulting product has been suitably used as the separator material. Various inventions relating to such a carbon and cured resin molded product have been proposed.

For example, JP-A-2000-021421 discloses a polymer electrolyte fuel cell separator member and a method of producing the same, wherein the separator member is formed of a graphite and cured resin molded product which is a plate-shaped molded product containing 60 to 85 wt% of a graphite powder having a particle size distribution with an average particle diameter of 50 µm or less and a maximum particle diameter of 100 µm or less, and 15 to 45 wt% of a thermosetting resin, and has a resistivity in the plane direction of 300×10⁻⁴ Ω·cm or less, a ratio of the resistivity in the thickness direction to the resistivity in the plane direction of 7 or less, and a flexural strength of 300 kgf/cm² or more.

JP-A-2000-243409 discloses a polymer electrolyte fuel cell separator member and a method of producing the same, wherein the separator member is formed of a carbon and cured resin molded product containing 40 to 90 wt% of a carbon powder and 10 to 60 wt% of a thermosetting resin and having a flexural strength at room temperature of 30 MPa or more and a flexural strength decrease rate from room temperature to 100°C of 30% or less.

A separator material formed of a graphite and cured resin molded product is generally produced by mixing a thermosetting resin dissolved in an organic solvent with a graphite powder, filling a molding die with a molding powder obtained by grinding the mixture, pre-molding the molding powder, placing the pre-molded product in a mold provided with grooves with a specific shape, and thermocompression-molding the pre-molded product. In this case, it is very difficult to fill the molding die provided with complicated grooves and having portions which differ in thickness. This makes it difficult to produce a homogenous separator material having a small variation in thickness.

Moreover, when the content of graphite powder in the separator material formed of a graphite and cured resin molded product is increased in order to increase conductivity, the material becomes fragile and produces cracks. This makes it difficult to assemble a cell stack with a sufficient clamping force when stacking single cells and to reduce the contact resistance between the single cells.

Several hundreds of single cells are stacked when forming an automotive fuel cell since a high output is required. Therefore, if the separator has a large variation in thickness, a large offset load may occur during cell stack assembly, whereby breakage may occur. A reduction in size and thickness of a cell stack is desired for automotive fuel cells. The thinnest portion of the separator may be required to have a thickness of 0.3 mm or less. The separator is also required to have strength properties which prevent cracking due to vibration or the like.

### DISCLOSURE OF THE INVENTION

The inventors of the present invention conducted tests and studies in order to obtain a homogeneous separator material which solves the above-described problems, has a small variation in thickness, and a minimum thickness of 0.3 mm or less. As a result, the inventors found that a fuel cell separator material which solves the above-described problems can be obtained by the method as disclosed in claim 1.

According to the present invention, a separator material which is homogeneous, has high thickness accuracy, a minimum thickness of 0.3 mm or less, for example, high material strength, and excellent gas impermeability, and is useful for reducing the size of fuel cells, and a process of producing the same can be provided.

### BRIEF DESCRIPTION OF THE DRAWINGS

FIG. 1 is a partial cross-sectional view showing a schematic structure of a polymer electrolyte fuel cell.

### BEST MODE FOR CARRYING OUT THE INVENTION

A fuel cell separator material according to the present invention includes green sheets formed by a doctor blade method using a slurry prepared by dispersing a graphite powder in a resin solution that is prepared by dissolving a resin binder in an organic solvent, a desired number of the green sheets being stacked and integrally thermocompression-molded

Since the separator material has high thickness accuracy, a small variation in thickness, excellent gas impermeability, and high material strength, the separator material is useful for reducing the thickness and the size of fuel cells.

A dispersant is added to the resin solution in order to stabilize the slurry. Since a thin green sheet having an arbitrary thickness can be formed by the doctor blade method, a separator material having a desired thickness can be produced by adjusting the thickness and the number of green sheets to be stacked.

A process of producing the above fuel cell separator material according to the present invention includes dispersing a graphite powder in a resin solution to prepare a slurry, forming a green sheet by a doctor blade method using the slurry, stacking the green sheets, and thermocompression-molding the stacked green sheets.

The slurry is prepared as follows. A resin binder and a dispersant are dissolved in an organic solvent to prepare a resin solution. The resin binder is not particularly limited insofar as the resin binder has resistance to acids such as an electrolyte (e.g., sulfonic acid) and heat resistance that withstands the fuel cell operating temperature. A thermosetting resin, a thermoplastic resin, or the like is used as the resin binder.

Examples of the thermosetting resin include a phenol resin such as a resol type phenol resin and a novolac type phenol resin, a furan resin such as a furfuryl alcohol resin, a furfuryl alcohol furfural resin, and a furfuryl alcohol phenol resin, a polyimide resin, a polycarbodiimide resin, a polyacrylonitrile resin, a pyrenephenanthrene resin, an epoxy resin, a urea resin, a diallyl phthalate resin, an unsaturated polyester resin, a melamine resin, and the like. These thermosetting resins may be used either individually or in combination.

Examples of the thermoplastic resin include a styrene resin such as an acrylonitrile-butadiene-styrene (ABS) resin, an acrylonitrile-styrene copolymer (AS), a high-impact polystyrene (HIPS), polystyrene (PS), a methyl methacrylate styrenebutadiene rubber copolymer (MBS), a methyl methacrylate-styrene copolymer (MS), an acrylonitrile-ethylene-propylene rubber-styrene copolymer (AES), and an acrylonitrile-styrene acrylate(AAS), a polyolefin resin such as polyethylene (PE), polypropylene (PP), polybutene-1, an ethylene-vinyl acetate copolymer (EVA), and an ethylene-vinyl alcohol copolymer (EVOH), a polyamide resin, a thermoplastic polyester resin, a polycarbonate (PC) resin, a wholly aromatic polyester resin, polyphenylene sulfide (PPS), a vinyl chloride resin (PVC), a polysulphone resin, a polyether ether ketone resin, a (modified) polyphenylene ether resin, polyoxymethylene (POM), polymethyl methacrylate (acryl) (PMMA), a fluororesin, a polyketone (PK), a norbornene, polyamideimide (PAI), polyphthalamide (PPA), and the like. These thermoplastic resins may be used either individually or in combination.

An elastomer may also be used as the resin binder. Examples of the elastomer include an isoprene elastomer, a butadiene elastomer, a diene elastomer, an olefin elastomer, an ether elastomer, a polysulfide elastomer, a urethane elastomer, a fluorine-containing elastomer, a silicone elastomer, a blend of two or more of these elastomers, a thermoplastic elastomer, a flexible thermosetting resin (e.g., epoxy resin), a blend of the above elastomer and the above thermosetting resin or thermoplastic resin, a thermosetting resin-modified elastomer, and the like.

The dispersant is added to the resin solution in order to stabilize the slurry. For example, a surfactant is used as the dispersant. Examples of the surfactant include a non-ionic surfactant such as an aromatic ether surfactant, a carboxylate surfactant, an acrylate surfactant, a surfactant phosphate, a sulphonate surfactant, a fatty acid ester surfactant, a urethane surfactant, a fluorine-containing surfactant, an aminoamide surfactant, and an acrylamide surfactant, a cationic surfactant such as an ammonium surfactant, a sulfonium surfactant, and a phosphonium-containing surfactant, and an anionic surfactant such as a carboxylic acid surfactant, a phosphoric acid surfactant, a sulfonic acid surfactant, a hydroxyfatty acid surfactant, and a fatty acid amide surfactant.

The organic solvent is not particularly limited insofar as the organic solvent dissolves the resin. Examples of the organic solvent include an alcohol such as methyl alcohol, ethyl alcohol, and isopropyl alcohol, and a ketone such as acetone and methyl ethyl ketone. It is preferable to use methyl ethyl ketone taking into account the stability and the viscosity of the slurry and the sheet drying rate when forming a sheet by the doctor blade method.

10 to 35 parts by weight of the resin binder and 0.1 to 10 parts by weight of the dispersant are mixed into the organic solvent, and the mixture is stirred to prepare a resin solution. If the amount of the resin binder is small, the strength nf the resulting green sheet decreases. If the amount of the resin binder is large, conductivity decreases. If the amount of the dispersant is smaller than 0.1 parts by weight, the dispersibility of the graphite powder decreases when preparing the slurry. If the amount of the dispersant is larger than 10 parts by weight, the properties of the resin deteriorate. Specifically, the quantitative ratio of the resin binder and the dispersant is set as described above in order to prevent deterioration in mechanical properties and chemical resistance (particularly properties in sulfuric acid) of the separator material. 100 parts by weight of a graphite powder is added to the resin solution. The graphite powder is dispersed in the resin solution using a universal stirrer, an ultrasonic stirrer, a cutter mixer, a triple roll, or the like to prepare a slurry.

As the graphite powder, artificial graphite, natural graphite, expanded graphite, a mixture thereof, or the like is used. It is preferable to use a graphite powder of which the grain size is adjusted in order to prepare a stable slurry which exhibits high fluidity even if the amount of solvent is reduced, and reduce drying shrinkage when forming a sheet by the doctor blade method to prevent cracking.

Specifically, a more advantageous slurry can be obtained due to a filling effect (i.e., graphite powder fine particles enter the space between graphite powder coarse particles) as the particle size distribution becomes broader. For example, a dense green sheet without cracking is obtained using an appropriate amount of graphite powder of which the grain size has been adjusted so that the maximum particle diameter is 150 µm or less and the average particle diameters determined using the Andreasen distribution equation are 30 to 70 µm, 5 to 10 µm, and 1 to 3 µm. A separator obtained by thermocompression-molding the resulting green sheet has high gas impermeability with a reduced thickness.

The viscosity of the slurry thus prepared is adjusted to 100 to 2000 mPa·s by adding an appropriate amount of an organic solvent. If the viscosity of the slurry is less than 100 mPa·s, the slurry flows out from a doctor blade. If the viscosity of the slurry is more than 2000 mPa·s, resistance increases when forming a sheet using a doctor blade, whereby elevations or depressions are formed on the surface of the sheet. As a result, a sheet cannot be formed smoothly. Elevations or depressions may be formed on the surface of the green sheet or the homogeneity of the green sheet may decrease due to air contained in the slurry. Therefore, it is preferable to remove air from the slurry by centrifugal de-aeration or vacuum de-aeration.

The slurry thus prepared is applied to a film by the doctor blade method. Specifically, after adjusting the gap between a doctor blade and the film, the slurry is poured into a slurry hopper of the doctor blade, and is applied to the film provided with a release agent to a uniform thickness. In order to form a film having a desired thickness by applying the slurry, the gap between the doctor blade and the film, the graphite concentration in the slurry, the viscosity of the slurry, and the like are adjusted so that the desired thickness (e.g., the thickness of the green sheet after drying is about 0.1 to 0.5 mm) is achieved.

The resulting film is cut to an appropriate length, and air-dried or spontaneously dried. After the surface of the film has been dried, the film is cut to a specific size using a cutter knife or a punching die to obtain a sheet having a specific shape and a specific size. After drying or cooling the sheet, the sheet is removed from the film to form a green sheet. In order to facilitate the removal operation, it is preferable to apply a release agent to the film in advance.

The green sheets thus formed are stacked in a mold in an appropriate number corresponding to the thickness of a separator material to be produced. The stacked green sheets are thermocompression-molded at a temperature of 150 to 250°C and a pressure of 10 to 100 MPa to produce a fuel cell separator material, for example. Since groove-shaped gas supply passages are formed in the separator material so that a portion having a different thickness (e.g., external seal portion) is formed, the thickness of the separator material can be adjusted by changing the number of sheets provided in a mold corresponding to the portion having a different thickness, for example. A thin separator material having a small variation in thickness can be produced.

### EXAMPLES

The present invention is described below by way of examples and comparative examples. Not that the following examples illustrate one embodiment of the present invention, and should not be construed as limiting the present invention.

### Example 1

A mixed resin of 33 parts by weight of a bifunctional aliphatic alcohol ether-type epoxy resin, 38 parts by weight of a polyfunctional phenol-type epoxy resin, 28 parts by weight of a novolac phenol resin (curing agent), and and 1 part by weight of 2-ethyl-4-methylimidazole (curing accelerator) was used as a resin binder. An anionic surfactant (polycarboxylic acid polymer) was used as a dispersant. Methyl ethyl ketone (MEK) was used as an organic solvent.

25 parts by weight of a resin binder and 1 part by weight of a dispersant were dissolved in 110 parts by weight of MEK to prepare a resin solution. 100 parts by weight of a natural graphite powder of which the grain size had been adjusted so that the average particle diameter was 50 µm (50 wt%), 10 µm (14 wt%), and 3 µm (40 wt%) was added to the resin solution. After sufficiently stirring the mixture, air was removed from the mixture by a centrifugal method to prepare a slurry having a viscosity of 200 mPa·s.

After adjusting the gap between a doctor blade and a polyester film, the slurry was poured into a slurry hopper of the doctor blade, and was applied to the film provided with a release agent. The applied slurry was air-dried using a fan to volatilize MEK as the solvent. The dried product was cut to specific dimensions and removed from the film to obtain a green sheet having a thickness of about 0.3 mm.

The green sheet was punched into a specific shape. A specific number of green sheets (the number of green sheets differed corresponding to each portion) were stacked in a mold (outer dimensions. 270×270 mm) in which grooves with a width ot 1 mm and a depth of 0.6 mm were formed within the range of 200×200 mm, and then thermocompression-molded at a pressure of 40 MPa and a temperature of 180°C. A separator material (200×200 mm, thickness: 0.8 mm, minimum thickness: 0.20 mm) in which grooves (gas passages) with a width of 1 mm and a depth of 0.6 mm were formed was thus produced.

### Examples 2 to 4

A resin solution was prepared using the resin binder, the dispersant, and the organic solvent used in Example 1. A natural graphite powder of which the grain size had been adjusted to the ratio shown in Table 1 was dispersed in the resin solution while changing the mixing ratio to obtain slurries with different viscosities. A separator material was produced in the same manner as in Example 1 using the resulting slurry.

### Comparative Example 1

The resin solution used in Example 1 and a natural graphite powder of which the grain size had been adjusted to the ratio shown in Table 1 were mixed so that the weight ratio of the resin solid content and the graphite powder was 20:80, and sufficiently mixed using a kneader. The mixture was air-dried and vacuum-dried to volatilize the organic solvent. After grinding the mixture, the grain size was adjusted to obtain a molding powder with a particle diameter of 0.1 to 0.5 mm. The molding powder was placed in a preforming die and preformed at a temperature of 70°C and a pressure of 3 MPa for 10 seconds to obtain a preform. A separator material was produced using the same mold as in Example 1.

### Comparative Examples 2 and 3

A separator material was produced in the same manner as in Example 1, except that slurries with different viscosities were prepared by changing the quantitative ratio of the organic solvent.

Table 1 shows production conditions for Examples 1 to 4 and Comparative Examples 1 to 3.

**TABLE 1**

| | | Example | | | | Comparative Example | |
|---|---|---|---|---|---|---|---|
| | | 1 | 2 | 3 | 4 | 2 | 3 |
| Resin solution (part by weight) | Resin binder | 25 | 25 | 25 | 25 | 25 | 25 |
| | Dispersant | 1 | 1 | 1 | 1 | 1 | 1 |
| | Organic solvent | 110 | 120 | 110 | 60 | 120 | 70 |
| Grain size of graphite powder (wt%) | 50µm | 50 | 40 | 60 | 70 | 50 | 50 |
| | 30µm | | 20 | | | | |
| | 20µm | | | 20 | | | |
| | 10µm | 10 | | | | 10 | 10 |
| | 5 µm | | | | 10 | | |
| | 3µm | 40 | 40 | | 20 | 40 | 40 |
| | 1µm | | | 20 | | | |
| Slurry (part by weight) | Resign solution | 136 | 146 | 136 | 86 | 146 | 96 |
| | Graphite powder | 100 | 100 | 100 | 100 | 100 | 100 |
| | Viscosity (mPa·s) | 200 | 250 | 500 | 1900 | 80 | 2500 |

The properties of the separator material were evaluated by the following methods. The measurement results are shown in Table 2.

### (1) Thickness accuracy

The thickness of the separator was measured at 27 points using a micrometer, and a value obtained by subtracting the minimum thickness from the maximum thickness was taken as the thickness accuracy.

### (2) Flexural strength (MPa)

The flexural strength was measured (at room temperature) in accordance with JIS R1601.

### (3) Strain at break (%)

The fracture strain was measured (at room temperature) in accordance with JIS R1601.

### (4) Resistivity (mΩ·cm)

The resistivity was measured (at room temperature) in accordance with JIS C2525.

### (5) Contact resistance (mΩ·cm²)

The contact resistance was measured at 1 A while bringing the test pieces in contact at a pressure of 1 MPa.

### (6) Gas permeation coefficient (mol·m·m⁻²·sec⁻¹·MPa⁻¹)

The amount of helium gas which permeated the separator per unit time and unit cross-sectional area when applying a differential pressure of 0.2 MPa using helium gas was measured.

**TABLE 2**

| | Example | | | | Comparative Example | | |
|---|---|---|---|---|---|---|---|
| | 1 | 2 | 3 | 4 | 1 | 2 | 3 |
| Flexural strength (MPa) | 58 | 65 | 70 | 64 | 52 | 55 | 66 |
| Strain at break (%) | 1.1 | 1.2 | 1.1 | 1.8 | 1.0 | 1.2 | 1.3 |
| Resistibility (mΩ·cm) | 8.8 | 10 | 21 | 15 | 9.4 | 13 | 9.7 |
| Contact resistance (mΩ·cm²) | 9.5 | 8.5 | 9.5 | 11 | 7.6 | 16 | 9.3 |
| Gas permeation coefficient (×10⁻¹² mol.m.m^{- 2}.sec⁻¹.MPa⁻¹) | 2.3 | 1.7 | 1.6 | 1.5 | 106 | 35 | 29 |
| Thickness accuracy (maximum thickness - minimum thickness) (µm) | 28 | 30 | 29 | 33 | 48 | 71 | 65 |

Since the separator material of Comparative example 1 produced by providing the molding die with the mixture of the resin binder and the graphite powder has a minimum thickness as small as 0.2 mm, the gas impermeability of the separator material decreased to a large extent due to pores. Moreover, the variation in thickness increased.

Since the slurry with a low viscosity was used for the separator material of Comparative Example 2, a leakage occurred when forming the green sheet, and the peripheral portion and the center portion of the green sheet were dried to different degrees, whereby the mixed state of the graphite powder became non-uniform. Therefore, cracks easily occurred due to the difference in stress caused by the difference in drying shrinkage. As a result, yield decreased. Moreover, since the contact resistance increased due to non-uniformity caused by precipitation of the graphite powder when drying the solvent, the separator material exhibited poor thickness accuracy and gas impermeability. Note that the two sides of the green sheet showed significantly different degrees of glossiness (i.e., the film side had glossiness and a larger graphite powder was observed), and the separator material had a curvature.

Since the slurry with a significantly high viscosity was used for the separator material of Comparative Example 3, the slurry solidified on the wall of the container when forming the green sheet. As a result, the slurry did not flow sufficiently so that stripe-shaped defects were observed on the green sheet. Therefore, a uniform green sheet could not be obtained, whereby the variation in thickness of the separator material increased. On the other hand, the separator materials of Examples 1 to 4 according to the present invention exhibited excellent thickness accuracy.

## Claims

1. A process of producing a fuel cell separator material comprising dispersing 100 parts by weight of a graphite powder in a resin solution prepared by
- dissolving 10 to 35 parts by weight of a resin binder and 0.1 to 10 parts by weight of a dispersant in an organic solvent to prepare a slurry having a viscosity of 100 to 2000 mPa·s,
- applying the slurry onto a film by a doctor blade method,
- drying the slurry by air,
- removing the dried slurry to form a dried green sheet having a thickness of 0.1 - 0.5 mm,
- punching the green sheets into a specific shape, stacking a plurality of the green sheets in a mold in which grooves are formed, and
- thermocompression-molding the stacked green sheets in the mold to form grooves for gas passages.

## Patentansprüche

1. Verfahren zur Herstellung eines Separatormaterials für Brennstoffzellen, umfassend das Dispergieren von 100 Gewichtsteilen Graphitpulver in einer Harzlösung, die hergestellt wird durch
- Lösen von 10 bis 35 Gewichtsteilen eines Harzbinders und von 0,1 bis 10 Gewichtsteilen eines Dispergiermittels in einem organischen Lösungsmittel, um einen Schlicker mit einer Viskosität von 100 bis 2000 mPa·s zu erzeugen,
- Auftragen des Schlickers auf eine Folie mittels eines Rakelauftragsverfahrens,
- Trocknen des Schlickers mittels Luft,
- Entfernen des getrockneten Schlickers, um eine getrocknete Grünfolie mit einer Dicke von 0,1 - 0,5 mm zu bilden,
- Ausstanzen der Grünfolien in einer bestimmten Form, Stapeln einer Vielzahl der Grünfolien in einer Form mit darin ausgebildeten Nuten, und
- Thermoformpressen der gestapelten Grünfolien in der Form, um Nuten für Gaskanäle zu bilden.

## Revendications

1. Procédé de production d'un matériau séparateur pour pile à combustible comprenant la dispersion de 100 parties en poids d'une poudre de graphite dans une solution de résine préparée par
- dissolution de 10 à 35 parties en poids d'une résine de liaison et de 0,1 à 10 parties en poids d'un dispersant dans un solvant organique pour préparer une suspension épaisse ayant une viscosité de 100 à 2 000 mPa·s,
- application de la suspension épaisse sur un film par un procédé à la racle,
- séchage de la suspension épaisse à l'air,
- enlèvement de la suspension épaisse séchée pour former une feuille verte séchée ayant une épaisseur de 0,1 à 0,5 mm,
- découpage des feuilles vertes à une forme spécifique, empilage d'une pluralité des feuilles vertes dans un moule dans lequel des rainures sont formées, et
- moulage par thermocompression des feuilles vertes empilées dans le moule pour former des rainures pour des passages de gaz.
